# EUROPÄISCHE PATENTANMELDUNG

(11) **EP 0 998 987 A1**
(43) Veröffentlichungstag der Anmeldung: **10.05.2000**
(21) Anmeldenummer: 99121641.7
(22) Anmeldetag: 30.10.1999
(51) Int. Cl.: B09B 1/00

(54) **Erdschacht für Deponien**

(30) Priorität: 03.11.1998 DE 29819638 U
(71) Anmelder: Stooss, Peter, 72829 Engstingen (DE)
(72) Erfinder: Stooss, Peter, 72829 Engstingen (DE)
(74) Vertreter: Ott, Elmar ,Dipl.-Ing.

(57) **Zusammenfassung**

Es wird ein als Kontrollschacht dienender Erdschacht für Abfall- oder Erddeponien vorgeschlagen, der aus mehreren übereinander gestapelten Fahrzeugreifen (2) bestehen kann. Der Erdschacht (1) kann durch eine Stützkonstruktion oder durch eine im Erdschacht (1) verlaufende Leiter (14) oder durch eine Zentrierkonstruktion zusätzlich axial stabilisiert sein. Durch die Verwendung von Fahrzeugreifen (2) entsteht ein Erdschacht (1) der über seine ganze Höhe verteilt angeordnete Auffangrinnen (7) hat, so daß eine Probenentnahme in unterschiedlichen Höhen des Erdschachts (1) möglich ist.

## Beschreibung

Die Erfindung betrifft einen Erdschacht für Deponien gemäß der Gattung des Anspruchs 1.

Für Deponien werden zum Entgasen des Erdreichs und als Kontrollschächte Erdschächte aus Beton verwendet, deren Wandung so ausgebildet ist, daß Flüssigkeit und Gas hindurchtreten kann. Derartige Erdschächte können als Kontrollschächte ausgebildet sein, die innen eine Einstiegsleiter oder andere Einstiegshilfen aufweisen können.

Der Erfindung liegt die Aufgabe zugrunde, einen Erdschacht, der als Kontrollschacht für Erddeponien geeignet ist, zu schaffen, der einen möglichst einfachen Aufbau hat.

Die Lösung dieser Aufgabe erhält man durch die im Anspruch 1 angegebenen Merkmale. Der Erdschacht ist aus übereinander gestapelten ringförmigen Elementen, die als Fahrzeugreifen oder reifenähnlichen Ringen ausgebildet sind, aufgebaut. Dies hat den Vorteil, daß insbesondere großdimensionierte Altreifen von Erdmaschinen, Ackermaschinen oder dergleichen einer Weiterverwertung zugeführt werden können, wobei sich außerdem für einen derart aufgebauten Erdschacht zusätzliche funktionelle Vorteile ergeben. Ein aus Altreifen aufgebauter Kontrollschacht hat nämlich den Vorteil, daß jedes der übereinander gestapelten ringförmigen Elemente eine Auffangrinne für Flüssigkeiten hat. Somit kann in jeder Höhe des Erdschachts durch die Wandung des Schachts eindringende Flüssigkeit gesammelt und zu einem späteren Zeitpunkt zu Untersuchungszwecken entnommen werden. Die Flüssigkeit kann durch die Wandung des Schachts zwischen den übereinander lose gestapelten Fahrzeugreifen eindringen. Ein derart aufgebauter Erdschacht ermöglicht ebenfalls die bei Abfalldeponien und sonstigen Deponien erforderliche Entgasung des Erdreichs. Durch die Verwendung von Altreifen entfällt eine aufwendige Verwertung oder Beseitigung der Altreifen. Aufgrund der Materialbeschaffenheit sind die Altreifen für die Erstellung von Schächten besonders geeignet und können nach Abbau einer weiteren Wiederverwertung zugeführt werden.

Anstelle von Altreifen können auch aus einem entsprechenden Material hergestellte ringförmige Elemente übereinander gestapelt einen Erdschacht bilden. Grundsätzlich können natürlich auch Neureifen als ringförmige Elemente Verwendung finden.

Gemäß einer bevorzugten Weiterbildung der Erfindung sind die übereinander gestapelten ringförmigen Elemente über eine Stützkonstruktion in ihrer koaxialen Ausrichtung stabilisiert. Eine solche Stützkonstruktion kann aus Metallstreben, Beton, Kunststoff oder aus anderen Materialien hergestellt sein, wobei auch eine im Erdschacht angeordnete Leiter zur Querstabilisierung und zur koaxialen Sicherung der übereinander gestapelten Elemente beitragen kann.

Eine als Leiter oder in anderer Weise ausgebildete Einstiegshilfe kann mit Halterungen in das Innenprofil der ringförmigen Elemente eingreifen, wobei im Bereich der Halterungen das Innenprofil auch vollständig mit Beton oder einer anderen Vergußmasse ausgefüllt sein kann. Dadurch wird einerseits eine sichere Befestigung der Halterungen gewährleistet und andererseits eine Erhöhung der axialen Druckstabilität erreicht.

Der Querschnitt der als Fahrzeugreifen ausgebildeten ringförmigen Elemente besitzt ein C-Profil, welches somit jeweils eine Auffangrinne bildet. Über die gesamte Höhe des Erdschachtes sind somit gleichmäßig verteilt angeordnete Auffangrinnen vorhanden, die zur Probenentnahme von Flüssigkeiten in idealer Weise dienen.

Die aus einem Hohlprofil gebildeten ringförmigen Elemente können Druckblöcke beinhalten, die in einem Erdschacht fluchtend übereinander ausgerichtet sind. So kann beispielsweise jeder Fahrzeugreifen im Winkelabstand von 120° einen oder mehrere solcher Druckblöcke enthalten, wodurch sich für den gesamten Erdschacht eine hohe axiale Druckstabilität ergibt. Auf diese Weise lassen sich auch sehr tiefe Erdschächte durch übereinander gestapelte Altreifen bilden.

Für die Herstellung der reifenähnlichen Ringe kann sehr vorteilhaft wiederaufbereiteter Altkunsstoff aus Abfällen und Produktionsabfällen, sogenannter Recyclingkunststoff, verwendet werden. Ein erfindungsgemäßer Kontrollschacht kann in eine bereits bestehende Deponie eingebracht werden. Er kann aber auch mit dem Auffüllen einer Deponie nach und nach aufgebaut werden.

Besonders vorteilhaft ist es, die liegend übereinander angeordneten Fahrzeugreifen oder reifenähnlichen Ringe an ihrem eine Auffangrinne bildenden Profil mit wenigstens einem als Überlaufnase oder dergl. ausgebildetem Überlaufelement auszustatten. Dadurch wird erreicht, daß die überlaufende Flüssigkeit von einem oberen Fahrzeugreifen nicht in einen darunter befindlichen Fahrzeugreifen gelangt. Eine Vermischung der Flüssigkeiten aus unterschiedlichen Höhenlagen wird dadurch vermieden.

Der Erdschacht kann vorteilhaft zur automatischen Probenentnahme in unterschiedlichen Höhen des Erdschachtes Flüssigkeit-Entnahmeeinrichtungen aufweisen. Da im Erdschacht aufgrund entstehender Gase eine Begehung zur Probenentnahme nicht immer ohne weiteres möglich ist, stellt eine automatische Probenentnahme eine sehr vorteilhafte Verbesserung dar.

Beim Aufbau des Erdschachtes ist es besonders günstig, wenn die übereinander zu stapelnden Fahrzeugreifen mittels einer Zentrierkonstruktion koaxial fixiert werden. Es werden hierzu einige Fahrzeugreifen über die Zentrierkonstruktion geführt, wobei dann um die aufeinander gestapelten Fahrzeugreifen Erde oder dergleichen angefüllt werden kann. Beim Anfüllen mit schweren Maschinen wird durch die Zentrierkostruktion sichergestellt, daß die den Erdschacht bildenden Fahrzeugreifen nicht seitlich verrutschen.

Um Fahrzeugreifen oder reifenähnliche Ringe von unterschiedlichem Durchmesser mittels der Zentrierkonstruktion beim Anfüllen von Erde axial sichern zu können, kann die Zentrierkonstruktion im Durchmesser verstellbar sein. Eine in der Länge verstellbare Zentrierkonstruktion ist zur Erstellung von unterschiedlich tiefen Erdschächten vorteilhaft. Es besteht aber auch die Möglichkeit, den Erdschacht in Modulbauweise zu erstellen, d. h. daß Erdschachtsabschnitte bereits als übereinander stapelbare Module vorgefertigt sind.

Der Erfindung liegt auch die Aufgabe zugrunde, ein Verfahren zur Erstellung eines Erdschachts aus übereinandergestapelten Fahrzeugreifen oder reifenähnlichen Ringen zu schaffen, welches eine möglichst sicheren Aufbau der übereinander gestapelten Fahrzeugreifen erlaubt.

Die Lösung dieser Aufgabe wird mit dem Verfahren gemäß Anspruch 20 erreicht. Eine kreis-, roh- oder sternförmige Zentrierkonstruktion wird vertikal aufgestellt, so daß dann Fahrzeugreifen oder dergleichen liegend über die Zentrierkonstruktion übereinandergestapelt werden können. Jetzt kann Erde oder Schutt oder anderes Material um den erstellten Abschnitt des Erdschachts aufgefüllt werden, und die Zentrierkonstruktion kann dann aus dem Erdschacht wenigstens teilweise nach oben herausgezogen oder verlängert werden, um weitere Fahrzeugreifen oder dergleichen koaxial mit Hilfe der Zentrierkonstruktion zu fixieren.

Die Erfindung wird nachfolgend anhand eines in der Zeichnung dargestellten Ausführungsbeispiels näher erläutert.

Es zeigen:
- Figur 1: einen aus mehreren übereinander gestapelten Fahrzeugreifen gebildeten Erdschacht,
- Figur 2: den Querschnitt eines als Altreifen ausgebildeten ringförmigen Elements des Erdschachts von Figur 1,
- Figur 3: ein ringförmiges Element mit einem in etwa L-förmigen Hohlprofil,
- Figur 4: den Aufbau eines Erdschachts mit einer Leiter in schematisierter Darstellung,
- Figur 5: übereinander gestapelte Fahrzeugreifen, die mittels einer Zentierkonstruktion axial fixiert sind, und
- Figur 6: einen Ausschnitt eines für einen Erdschacht verwendeten Fahrzeugreifens im Schnitt mit einer Überlaufnase.

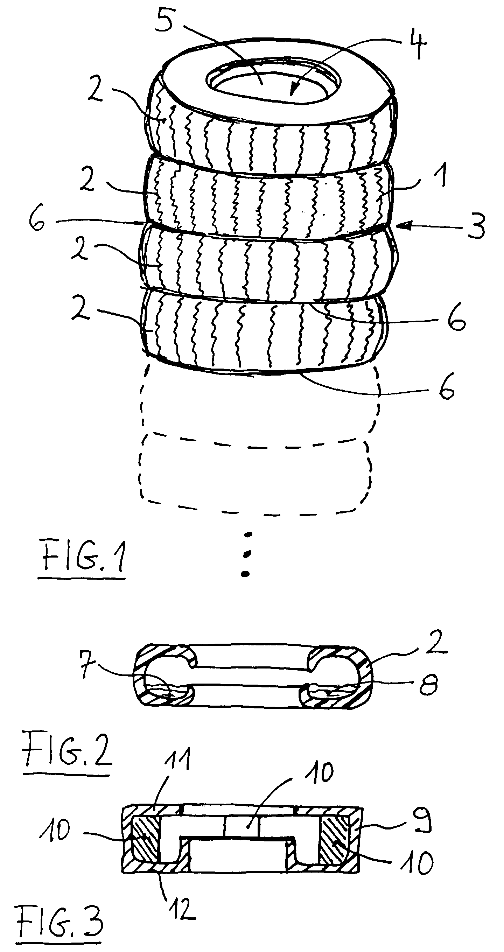

Der in Figur 1 dargestellte Erdschacht 1 besteht aus mehreren übereinander gestapelten Fahrzeugreifen 2, bei denen es sich um Altreifen von Erdmaschinen handeln kann. Der Erdschacht 1 hat eine für Gase und Flüssigkeiten durchlässige Wandung 3 und besitzt einen Einstieg 4. Werden anstelle von großdimensionierten Altreifen von Erdmaschinen kleinere ringförmige Elemente für den Aufbau eines Erdschachts verwendet, so kann der Innendurchmesser des Erdschachts für einen Einstieg zwar zu klein sein, jedoch kann dennoch über die Erdschachtöffnung 5 eine Sichtkontrolle und eine Entnahme von Flüssigkeitsproben in unterschiedlichen Schachthöhen erfolgen. Da die Fahrzeugreifen 2 gegenseitig nicht dicht abschließen, kann Flüssigkeit an den Trennfugen 6 zwischen den Fahrzeugreifen 2 in den Erdschacht 1 eindringen. Die eindringende Flüssigkeit wird in einer vom C-förmigen Querschnittsprofil gebildeten Auffangrinne aufgefangen und kann somit dort zu Analysezwecken in unterschiedlichen Höhen des Erdschachts entnommen werden.

Figur 2 zeigt den Querschnitt eines Fahrzeugreifens 2, dessen Hohlprofil ein C-Profil bildet. Dadurch entsteht die oben erwähnte Auffangrinne 7, in der sich Flüssigkeit 8 sammeln kann.

In Figur 3 ist ein ringförmiges Element 9 dargestellt, welches anstelle der Fahrzeugreifen 2 zu einem Erdschacht übereinander gestapelt werden kann. In dem ringförmigen Element 9 sind Druckblöcke 10 angeordnet, die eine Abstützung der unteren und oberen Seitenwandungen 11, 12 übernehmen. Die Druckblöcke 10 mehrerer übereinander gestapelter ringförmiger Elemente sind in einem Erdschacht fluchtend angeordnet, so daß sich dadurch für den Erdschacht eine hohe axiale Druckstabilität ergibt. Im Bereich der Druckblöcke 10 können auch Einstiegshilfen oder zusätzliche Stützkonstruktionen befestigt sein, die eine Erhöhung der Querstabilität des Erdschachts bewirken.

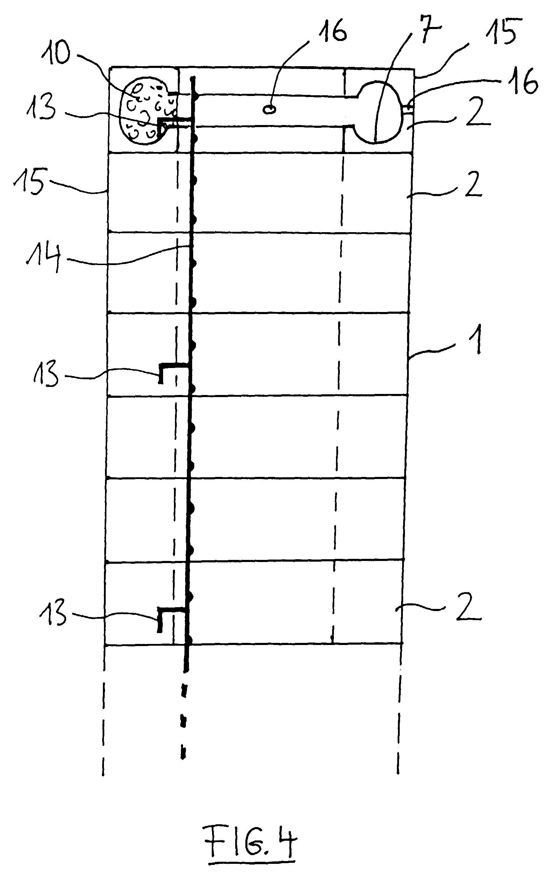

Bei dem in Figur 4 schematisiert dargestellten Erdschacht 1 sind in das Hohlprofil der als Fahrzeugreifen 2 ausgebildeten ringförmigen Elemente Halterungen 13 einer Leiter 14 eingesetzt, wobei jede der Halterungen 13 in einem Druckblock 10 aus Beton eingegossen sein kann.

Die Leiter 14 bildet eine Einstiegshilfe, welche zur Querstabilisierung des Erdschachts 1 beiträgt. Je nach Anwendungsfall können Halterungen 13 in jeden Fahrzeugreifen 2 oder - wie in Figur 4 dargestellt - nur in einen Teil der Fahrzeugreifen 2 eingreifen. Außerdem können zusätzlich zur Leiter 14 Stützkonstruktionen aus Stahl zur Stabilisierung des Erdschachts 1 vorgesehen sein, wobei die Leiter 14 bereits selbst eine Stützkonstruktion für den Erdschacht 1 darstellt.

Die Fahrzeugreifen 2 können im Bereich ihrer Umfangsflächen 15, die die Laufflächen der Fahrzeugreifen bilden, zusätzliche Bohrungen 16 haben, durch die Flüssigkeit in die Auffangrinnen 7 gelangen kann.

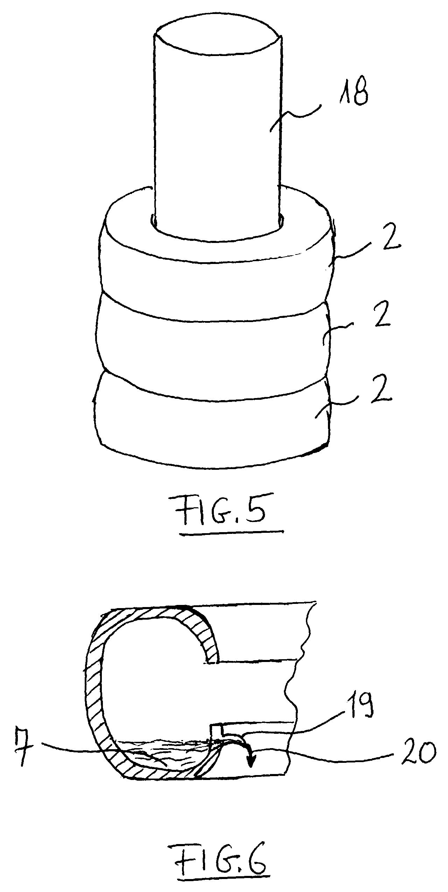

In Figur 5 sind die zur Bildung eines Erdschachts übereinander gestapelten Fahrzeugreifen 2 mittels einer rohrförmigen Zentrierkonstruktion 18 koaxial fixiert. Die Zentrierkonstruktion 18 kann auch aus einer Gitterkonstruktion, einer kreis- oder sternförmigen Konstruktion bestehen. Wesentlich ist dabei, daß die Fahrzeugreifen 2 sicher koaxial fixiert werden, uni gegen den derart aufgerichteten Erdschacht seitlich Erde oder Schutt anfüllen zu können.

Bei dem in Figur 6 dargestellten Fahrzeugreifen ist am Innenrand der Auffangrinne 7 eine Überlaufnase 19 angebracht, die sicherstellt, daß überlaufende Flüssigkeit entsprechend Pfeilrichtung 20 so abfließen kann, daß diese Flüssigkeit nicht in darunter angeordnete Auffangrinnen anderer Fahrzeugreifen gelangt.

## Patentansprüche

1. Erdschacht, der als Kontrollschacht und/oder Schacht zur Gewinnung von Flüssigkeitsproben und/oder zur Entgasung dient, insbesondere für Abfall- oder Erddeponien, der eine vom Erdreich umschlossene Röhre bildet und dessen Wandung flüssigkeitsdurchlässig ist, **dadurch gekennzeichnet**, daß der Erdschacht (1) aus übereinander gestapelten ringförmigen Elementen, die als Fahrzeugreifen (2) oder reifenähnlichen Ringen ausgebildet sind, besteht.

2. Erdschacht nach Anspruch 1, **dadurch gekennzeichnet**, daß die Fahrzeugreifen (2) großdimensionierte Altreifen von Erdmaschinen oder Ackermaschinen sind.

3. Erdschacht nach einem der Ansprüche 1 oder 2, **dadurch gekennzeichnet**, daß die zu einem Erdschacht (1) übereinander gestapelten ringförmigen Elemente stützende, als Distanzelemente wirkende Druckblöcke (10) enthalten.

4. Erdschacht nach einem der vorhergehenden Ansprüche, **dadurch gekennzeichnet**, daß die übereinander gestapelten ringförmigen Elemente über eine Stützkonstruktion in ihrer koaxialen Ausrichtung stabilisiert sind.

5. Erdschacht nach einem der vorhergehenden Ansprüche, **dadurch gekennzeichnet**, daß der Erdschacht (1) einen Einstieg (4) mit einer Leiter (14) hat.

6. Erdschacht nach Anspruch 5, **dadurch gekennzeichnet**, daß die Leiter (14) mehrere ringförmige Elemente miteinander verbindet und einen Querstabilisator für den Erdschacht (1) bildet.

7. Erdschacht nach einem der Ansprüche 5 oder 6, **dadurch gekennzeichnet**, daß die Einstiegshilfen mit Halterungen (13) in das Innenprofil der ringförmigen Elemente eingreifen.

8. Erdschacht nach einem der vorhergehenden Ansprüche, **dadurch gekennzeichnet**, daß der Querschnitt der ringförmigen Elemente ein C-Profil bildet.

9. Erdschacht nach einem der vorhergehenden Ansprüche, **dadurch gekennzeichnet**, daß jedes ringförmige Element eine Auffangrinne (7) zum Auffangen von zwischen den ringförmigen Elementen eindringender Flüssigkeit hat.

10. Erdschacht nach einem der vorhergehenden Ansprüche, **dadurch gekennzeichnet**, daß in den übereinander gestapelten ringförmigen Elementen über die gesamte Höhe des Erdschachts (1) fluchtende Druckblöcke (10) angeordnet sind.

11. Erdschacht nach Anspruch 10, **dadurch gekennzeichnet**, daß in jedem ringförmigen Element wenigstens drei Druckblöcke (10) in gleichen Winkelabständen zueinander angeordnet sind, so daß das Ringprofil an den Positionen der Druckblöcke (10) vollständig ausgefüllt ist.

12. Erdschacht nach einem der Ansprüche 10 oder 11, **dadurch gekennzeichnet**, daß die Druckblöcke (10) aus einem druckfesten Kunststoff oder aus Beton bestehen.

13. Erdschacht nach einem der vorhergehenden Ansprüche, **dadurch gekennzeichnet**, daß an der Umfangsfläche (15) der ringförmigen Elemente Bohrungen (16) angeordnet sind.

14. Erdschacht nach einem der vorhergehenden Ansprüche, **dadurch gekennzeichnet**, daß als Wekstoff für die Herstellung der reifenähnlichen Ringe wiederaufbereiteter Altkunsstoff aus Abfällen und Produktionsabfällen verwendet wird.

15. Erdschacht nach einem der vorhergehenden Ansprüche, **dadurch gekennzeichnet**, daß die liegend übereinander angeordneten Fahrzeugreifen (2) an ihrem eine Auffangrinne (7) bildenden Profil wenigstens eine in Richtung Mittelachse des Erdschachts (1) abstehende Überlaufnase (19) oder ein anderes Überlaufelement haben.

16. Erdschacht nach einem der vorhergehenden Ansprüche, **dadurch gekennzeichnet**, daß zur automtischen Probenentnahme in unterschiedlichen Höhen des Erdschachts (1) Flüssigkeits-Entnahmeeinrichtungen angeordnet sind.

17. Erdschacht nach einem der vorhergehenden Ansprüche, **dadurch gekennzeichnet**, daß sich zur Stabilisierung des Erdschachts (1) eine vertikal ausgerichtete kreis-, rohr- oder sternförmige Zentrierkonstruktion (18) im Erdschacht (1) erstreckt.

18. Erdschacht nach Anspruch 17, **dadurch gekennzeichnet**, daß die Zentrierkonstruktion (18) im Durchmesser und/oder in der Länge verstellbar ist.

19. Erdschacht nach einem der vorhergehenden Ansprüche, **dadurch gekennzeichnet**, daß der Erdschacht in Modulbauweise aus mehreren übereinander gestapelten Modulen mit jeweils mehreren ringförmigen Elementen zusammengesetzt ist.

20. Verfahren zur Erstellung eines Erdschachts aus übereinander gestapelten Fahrzeugreifen (2) oder reifenähnlichen Ringen, insbesondere nach Anspruch 1, **dadurch gekennzeichnet**, daß eine kreis-, rohr- oder sternförmige Zentrierkonstruktion (18) vertikal aufgestellt wird, daß dann die Fahrzeugreifen (2) liegend über die Zentrierkonstruktion (18) geführt werden, daß dann Erde oder Schutt oder dergleichen um den wenigstens teilweise aufgebauten Erdschacht angefüllt wird.

21. Verfahren nach Anspruch 20, **dadurch gekennzeichnet**, daß die Zentrierkonstruktion zunächst nur teilweise nach oben aus dem teilweise aufgebauten Erdschacht herausgezogen oder verlängert wird, und daß dann weitere übereinander gestapelte Fahrzeugreifen (2) oder dergleichen mittels der Zentrierkonstruktion (18) koaxial fixiert werden und dann weitere Erde seitlich angefüllt wird.

22. Verfahren nach einem der Ansprüche 20 oder 21, **dadurch gekennzeichnet**, daß die Zentrierkonstruktion (18) oben aus dem fertiggestellten Erdschachts herausgezogen wird.
